# EUROPEAN PATENT SPECIFICATION

(11) **EP 2 994 313 B1**
(45) Date of publication and mention of the grant of the patent: **05.11.2025**
(21) Application number: 14795127.1
(22) Date of filing: 09.05.2014
(51) Int. Cl.: B41J 2/175

(54) **CANTILEVERED MICRO-VALVE AND INKJET PRINTER USING SAID VALVE**
FREITRAGENDES MIKROVENTIL UND TINTENSTRAHLDRUCKER MIT DIESEM VENTIL
MICROVALVE EN PORTE-À-FAUX ET IMPRIMANTE À JET D'ENCRE UTILISANT LADITE VALVE

(30) Priority: 10.05.2013 US 201361821915 P; 08.05.2014 US 201414272622
(43) Date of publication of application: 16.03.2016
(73) Proprietor: Matthews International Corporation, Pittsburgh, Pennsylvania 15212 (US)
(72) Inventor: BUSKIRK, William, A., Albany, Oregon 97321 (US); FLEGO, Steven, E., Portland, Oregon 97236 (US); HALUZAK,Charles, C., Philomath, Oregon 97370 (US); DUNN, Brian, Venetia, Pennsylvania 15367 (US); JENSEN, Paul, C., Camas, Washington 98607 (US); GILSON, Charles, Philomath, Oregon 97370 (US); KIMERLING, Thomas, E., Corvallis, Oregon 97333 (US); LEIGHTON, Glenn, J.T., Doncaster South Yorkshire DN6 0NR (GB)
(74) Representative: Patentwerk B.V.
(86) International application number: PCT/US2014/037422
(87) International publication number: WO 2014/182984

(56) References cited:
- WO-A1-2012/002942
- DE-A1- 3 608 550
- JP-A- H0 911 471
- JP-A- S57 197 176
- US-A1- 2004 137 300
- US-A1- 2005 133 751
- US-A1- 2005 259 131
- US-A1- 2011 073 788
- US-B1- 6 352 337

## Description

The present invention relates to micro-valve system including a cantilevered micro-valve and its use in inkjet printers and, more particularly, in inkjet printer heads. A conventional micro-valve system is known from DE 36 08 550 A1.

Print heads with orifi that are substantially open to ambient, which includes many thermal and piezo or electronic push-pump type inkjet heads, have an issue commonly called "decap". Decap is fundamentally caused by ink carrier fluid (solvent) evaporation, leading to increased viscosity and/or non-Newtonian behavior of the ink constituents in the nozzle. This leads, at a minimum, to lower drop volume, poor trajectory, and random droplet behavior and, in the most severe form, the nozzle becomes fully plugged and cannot dispense any ink whatsoever. Water-based inks suffer decap to varying degrees depending on dye or pigment loading and the use of co-solvents. 100% organic-solvent based inks, such as those using pure methanol or MEK, experience much worse decap than water-based inks, due to the much higher relative evaporation rate at printing temperatures (ambient, or typically greater).

Print heads with orifi that are substantially open to ambient also have various issues caused by the propensity of air-borne contaminants falling on and being trapped by the "sticky" residue of ink in and near orifi. In its simplest form, this is trapped "dust" that causes puddling around open orifi. If the dust (and ink contamination) remains on the surface near a bore ledge, it can lead to droplet trajectory errors. In a severe form, dust can be sucked into a nozzle during the refill portion of the drop ejection cycle, leading to trajectory errors, lower drop weight, and even complete clogging.

Print heads that force drops out of an open orifice can exhibit an issue commonly called "gulping". Gulping is caused by air/gas that gets trapped in the "suckback" or flow of fluid back into the bore or nozzle that did not "escape" during the firing event. The air gets pulled backward into the firing chamber and may even progress as far as the fluid re-fill region upstream of the nozzle. Trapped air may cause low drop volume, via a flow blockage effect, and may even cause complete vapor lock of firing chambers for both piezo driven and thermal inkjet heads. Trapped gas in piezo inkjet heads that rely on acoustic waves causes degradation by lowering the acoustic wave velocity in the fluid channel via added compliance. This affects proper drop formation and velocity. This defect is caused when timing pulses designed for a fully-wetted firing chamber are disrupted by the added compliance of the second (gas) phase.

For thermal inkjet devices, gas trapped near the firing resistor causes poor heat transfer during the firing pulse, creating a weak drive bubble which simultaneously causes low drop mass and low drop velocity. Low drop mass directly affects the as-designed drop spread attributes. Low drop velocity typically leads to trajectory errors which impact maximum dispense distance.

Problems with existing "macro" valve jets include:
- frequency limitations of commercially available, solenoid-driven inkjet valves;
- limited nozzle density of solenoid driven valves; and
- large drop size of solenoid driven valves.

Problems with continuous inkjet (CIJ) include:
- CIJ suffers a lack of print quality compared to discrete droplet inkjet devices. This is due to having less control over drop placement and drop volume.

Disclosed herein is an inkjet printer wherein drop ejection functions by means of a pressurized fluid plenum, with a fluid inlet side and a fluid outlet side that includes one or more discrete nozzles (or orifi). Any typical means of pressurizing fluid, e.g., pumps, can be utilized. Each orifice can be independently sealed by a piezo cantilevered beam in the non-firing state via a mechanic bias, an electrical bias or a static pressure gradient caused by the differential of higher plenum internal pressure versus outside ambient pressure. This is referred to as the "normally closed" position and desirably does not require power to the cantilevered beam.

When drop ejection is desired, an electrical signal is sent to (or withheld from) the cantilevered beam, which causes the cantilevered beam to tip and bend away from its normally-closed position sealing the nozzle to an open position where the orifice is open. This enables fluid (such as liquid or gas) to flow around the end of the cantilevered beam and out of the orifice.

At a certain amount of deflection, determined by fluid mechanics, the cantilevered beam no longer has to overcome the static pressure gradient, because fluid completely surrounds the cantilevered beam and the static pressure forces are balanced. The cantilevered beam makes a transition from "static" behavior to behavior governed by complex dynamic fluid and cantilevered beam mechanics. When the drive signal stops after the nozzle is in the open position, the cantilevered beam is in a stressed state such that it desires to return to the closed position with no added energy input.

With the cantilevered beam described herein, the drop volume is a strong function of nozzle open-time and enables drop volume modulation with no change in the size of the nozzle. This capability is difficult to achieve in thermal inkjets, and it normally requires more than one resistors firing in a chamber. However, it is possible to achieve this behavior in displacement-based piezoelectric inkjet printers with advance drive waveform shaping. The cantilevered beam described herein does not require complicated waveforms - it simply requires leaving a square or other simple electrical pulse "on" for a longer duration of time.

More specifically, disclosed herein is a micro-valve system comprising: an orifice plate including an orifice which is configured to dispense a fluid; and a cantilevered beam coupled in spaced relation to the orifice plate and moveable between positions where the orifice is closed and opened by the cantilevered beam. The cantilevered beam is comprised of one or more piezoelectric layers that facilitate bending of the cantilevered beam in response to the application of one or more electrical signals to the one or more piezoelectric layers. In responsive to application of the one or more electrical signals to the one or more piezoelectric layers the cantilevered beam either: moves from a curved starting position covering and sealing the orifice away from the orifice plate and wherein termination of the one or more electrical signals to the one or more piezoelectric layers causes the cantilevered beam to return back to the curved starting position covering and sealing the orifice based on a mechanical bias of the cantilevered beam, wherein at least a portion of the mechanical bias is generated by the fluid at atmospheric pressure..

The cantilevered beam can include a pair of piezoelectric layers that are spaced from each other and spaced from the orifice plate. The cantilevered beam can be responsive to either: application of a first electrical signal to one of the pair of piezoelectric layers to bend from the starting position spaced from the orifice plate toward the orifice plate and termination of the first electrical signal and application of a second electrical signal to the other of the pair of piezoelectric layers to return back to the starting position spaced from the orifice plate; or application of a first electrical signal to one of the pair of piezoelectric layers to bend from the starting position adjacent the orifice plate away from the orifice plate and termination of the first electrical signal and application of a second electrical signal to the other of the pair of piezoelectric layers to return back to the starting position adjacent the orifice plate.

A unimorph version of the cantilevered beam includes a single piezoelectric layer on one side of a support layer, e.g., a layer of silicon or inert material, such as, without limitation, nickel. A bimorph version of the cantilevered beam includes a pair of piezoelectric layers on opposite sides of the support layer.

The cantilevered beam at its proximal end can be coupled to the orifice plate and the cantilevered beam at its distal end can be moveable between positions where the orifice is closed and opened.

The cantilevered beam can bend toward the orifice plate and close the orifice.

The cantilevered beam further includes a layer of material that causes the cantilevered beam to have a bend in the absence of the one or more electrical signals being applied to the one or more piezoelectric layers. Thicker and thinner thicknesses of the layer of material can cause the cantilevered beam to have more and less bend, respectively, in the absence of the one or more electrical signals being applied to the one or more piezoelectric layers. Also or alternatively, the as-deposited stress in one or more layers can be purposefully modulated to a desired value and this can be used separately or in combination with thickness choice to effect the static beam bend or "curl".

The cantilevered beam can include a plurality of layers. In plan view, at least one of the layers of the cantilevered beam can have one or a combination of the following shapes: rectangular, trapezoidal, polygon and curvilinear.

The micro-valve system can further include means for sealing the orifice when the cantilevered beam bends towards the orifice plate. The means for sealing the orifice can include at least one of the following: a raised surface on the distal end of the cantilevered beam; and/or a raised surface on the orifice plate surrounding the orifice.

The micro-valve system can further include a plurality of orifices in the orifice plate; and a plurality of the cantilevered beams disposed in spaced relation to the orifice plate, wherein each cantilevered beam is moveable between positions where one of the plurality of orifices is closed and opened by said cantilevered beam.

The plurality of cantilevered beams can be arranged side-by-side, interdigitated, or in an x, y array.

The micro-valve system can further include an output manifold coupled to a side of the orifice plate opposite the cantilevered beam.

The output manifold can include one or more paths each of which is configured to direct fluid output through each orifice in communication with said path in a predetermined direction.

At least one of the piezoelectric layers does not extend to a distal end of the cantilever beam.

Also disclosed herein is a printhead comprising: an input manifold; and a plurality of micro-valves coupled to the input manifold, wherein the plurality of micro-valves includes an orifice plate including a plurality of orifices and a plurality of cantilevered beams disposed in spaced relation to the orifice plate, wherein each cantilevered beam is moveable between positions where one of the plurality of orifices is closed and opened by the cantilevered beam. Each cantilevered beam is comprised of one or more piezoelectric layers that facilitate bending of the cantilevered beam in response to the application of one or more electrical signals to the one or more piezoelectric layers. In response to respective application and termination of the one or more electrical signals to the one or more piezoelectric layers, the cantilevered beam either: moves from a starting position spaced from the orifice plate toward the orifice plate and to return back to the starting position spaced from the orifice plate; or moves from a starting position adjacent the orifice plate away from the orifice plate and to return back to the starting position adjacent the orifice plate.

At least one cantilevered beam can include a pair of piezoelectric layers that are spaced from each other and spaced from the orifice plate. The cantilevered beam can be responsive to either: application of a first electrical signal to one of the pair of piezoelectric layers to bend from the starting position spaced from the orifice plate toward the orifice plate and termination of the first electrical signal and application of a second electrical signal to the other of the pair of piezoelectric layers to return back to the starting position spaced from the orifice plate; or application of a first electrical signal to one of the pair of piezoelectric layers to bend from the starting position adjacent the orifice plate away from the orifice plate and termination of the first electrical signal and application of a second electrical signal to the other of the pair of piezoelectric layers to return back to the starting position adjacent the orifice plate.

Each cantilevered beam at its proximal end can be coupled between the orifice plate and the input manifold and at its distal end can be moveable between positions where one of the orifices is closed and opened.

Each cantilevered beam can bend toward the orifice plate closing one of the orifices.

Each cantilevered beam can further include a first layer of silicon or inert material, said first layer including thereon a second layer of material that causes the cantilevered beam to bend in the absence of the electrical signal being applied to the cantilevered beam.

The inert material can be nickel, however, the use of other piezoelectrically inert materials known in the art (e.g., without limitation, glass, ceramic, silicon oxide, etc.) is envisioned. The second layer of material can be an oxide layer. Thicker and thinner thicknesses of the oxide layer can cause the cantilevered beam to bend more and less, respectively, in the absence of the one or more electrical signals being applied to the cantilevered beam. Also or alternatively, the as-deposited stress in one or more layers can be purposefully modulated to a desired value and this can be used separately or in combination with thickness choice to effect the static beam bend or "curl".

In plan view, the first layer can have one or a combination of the following shapes: rectangular, trapezoidal, polygon and curvilinear.

The printhead can further include means for sealing each orifice when one of the cantilevered beams bends towards the orifice plate. The means for sealing each orifice includes at least one of the following: a raised surface on the one cantilevered beam; or a raised surface on the orifice plate surrounding the orifice.

The input manifold and the plurality of micro-valves can form a plenum.

The plurality of cantilevered beams can be arranged side-by-side, interdigitated, or in an x, y array.

At least one of the piezoelectric layers does not extend to a distal end of the cantilever beam.
Fig. 1 is a block diagram of an inkjet printer that includes an array of micro-valves (or bender valves) that are coupled to a carrier via a manifold;
Fig. 2 is a section taken along lines II-II in Fig. 1 showing a single instance of a micro-valve comprising a first embodiment cantilevered beam moveable between a closed position (shown by a dashed line) sealing a nozzle and an open position spaced from said nozzle;
Fig. 3 is a view taken along lines II-II in Fig. 1 (similar to Fig. 2), but including a controller for controlling the position of the first embodiment cantilevered beam of the illustrated micro-valve;
Fig. 4 is an isolated view of the tip or distal end of the micro-valve and the nozzle of the orifice plate of Figs. 2 and 3 showing an optional raised surface on the tip or distal end of the micro-valve and/or an optional raised surface around the nozzle;
Fig. 5 is an isolated plan view of the bottom of the micro-valve shown in Figs. 2 and 3 having an optional trapezoidal shape versus a rectangular shape;
Fig. 6 is a cross section of the micro-valve being assembled to the carrier, wherein the micro-valve comprises a second embodiment cantilevered beam wherein portions of a piezoelectric layer and layers above the piezoelectric layer in the first embodiment cantilevered beam have been removed from the tip or distal end of the cantilevered beam in the second embodiment cantilevered beam;
Fig. 7 is an isolated plan view of an array of micro-valves positioned side-by side;
Fig. 8 is an isolated plan view of an array of micro-valves having two rows of cantilevered beams formed with their bases away from each other and with the tips of the cantilevered beams interdigitated;
Fig. 9 is a section taken along lines II-II in Fig. 1 showing a single instance of a micro-valve comprising a third embodiment cantilevered beam having a pair of spaced piezoelectric layers, wherein the cantilevered beam is moveable between a closed position (shown by a dashed line) sealing a nozzle and an open position spaced from said nozzle;

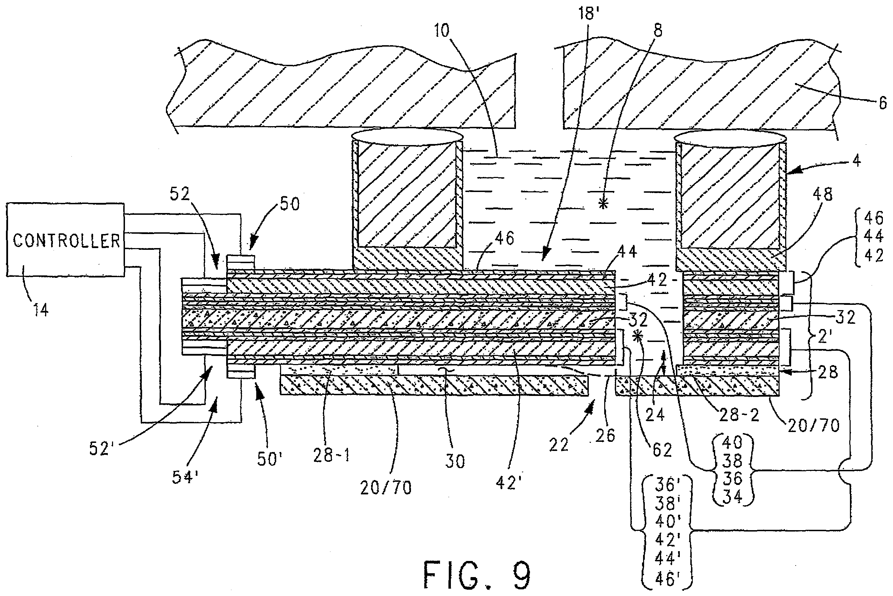

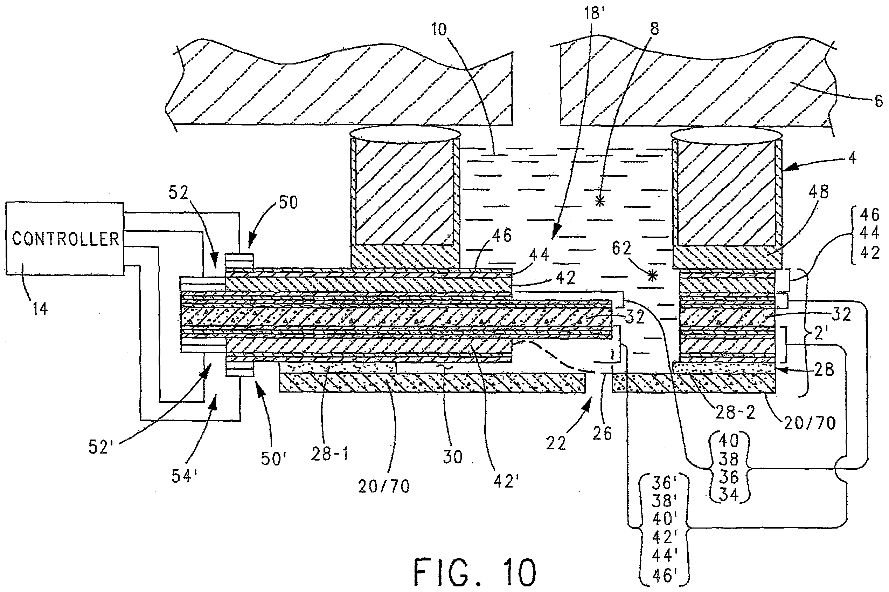

Fig. 10 is a section (similar to Fig. 9) showing a single instance of a micro-valve comprising a fourth embodiment cantilevered beam having a pair of spaced piezoelectric layers, wherein the cantilevered beam is moveable between a closed position (shown by a dashed line) sealing a nozzle and an open position spaced from said nozzle, wherein portions of a top piezoelectric layer and layers above the top piezoelectric layer, and portions of a bottom piezoelectric layer and layers below the bottom piezoelectric layer have been removed from the tip or distal end of the cantilevered beam in the third embodiment cantilevered beam; and
Fig. 11 is a view taken along lines II-II in Fig. 1 (similar to Fig. 3), but including an output manifold that can be coupled to the output side of the orifice plate to collect the output of each micro-valve and direct it to other locations, such as a mixing chamber or an output port.

The present invention will now be described with reference to the accompanying figures where like reference numbers correspond to like elements.

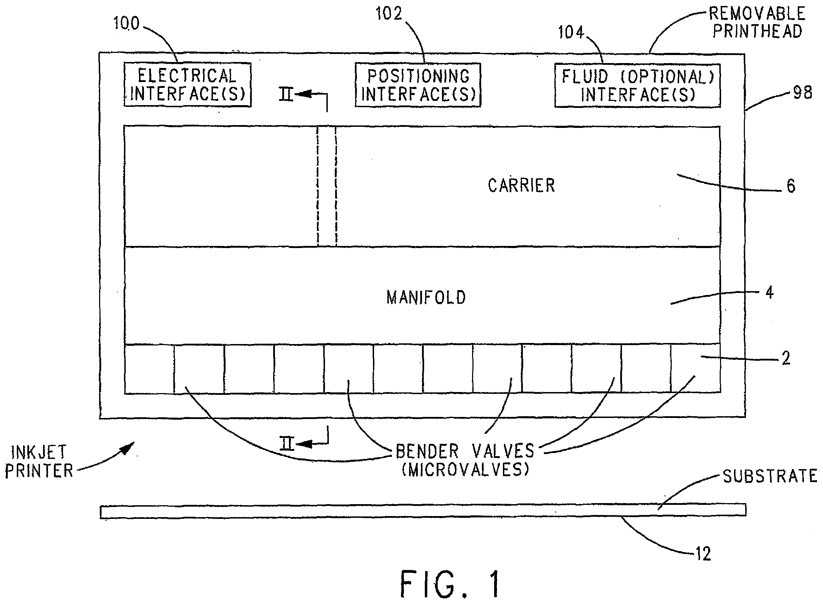

With reference to Fig. 1, disclosed herein is an inkjet printer comprised of a micro-valve system that includes a single micro-valve 2 or an array of micro-valves 2 (discussed hereinafter) coupled to a carrier 6 via an input manifold 4. The array of micro-valves 2, also called bender valves, can be in any suitable and/or desirable configuration. For example, the array of micro-valves can be an X x Y array of micro-valves, where X ≥ 1 and Y ≥ 0. However, this is not to be construed as limiting the invention.

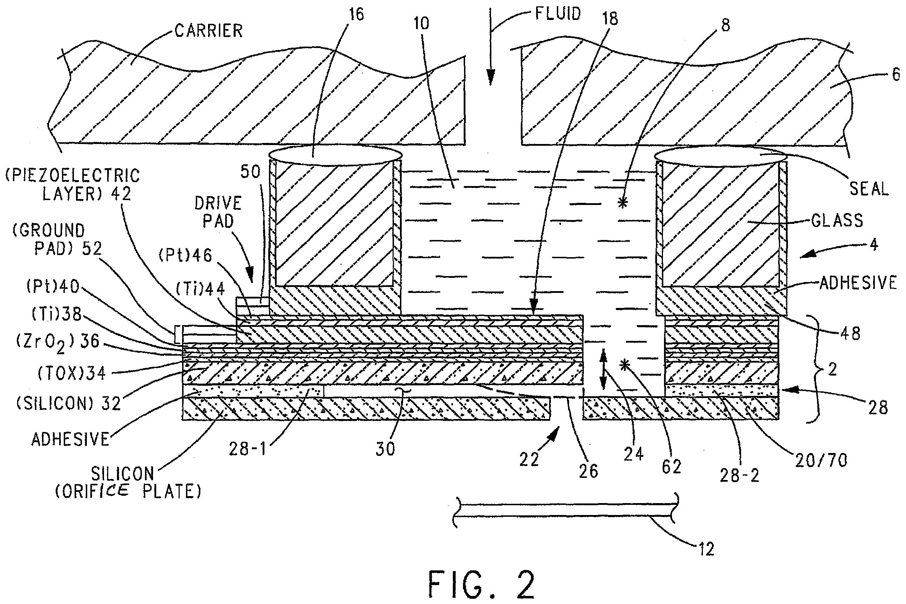

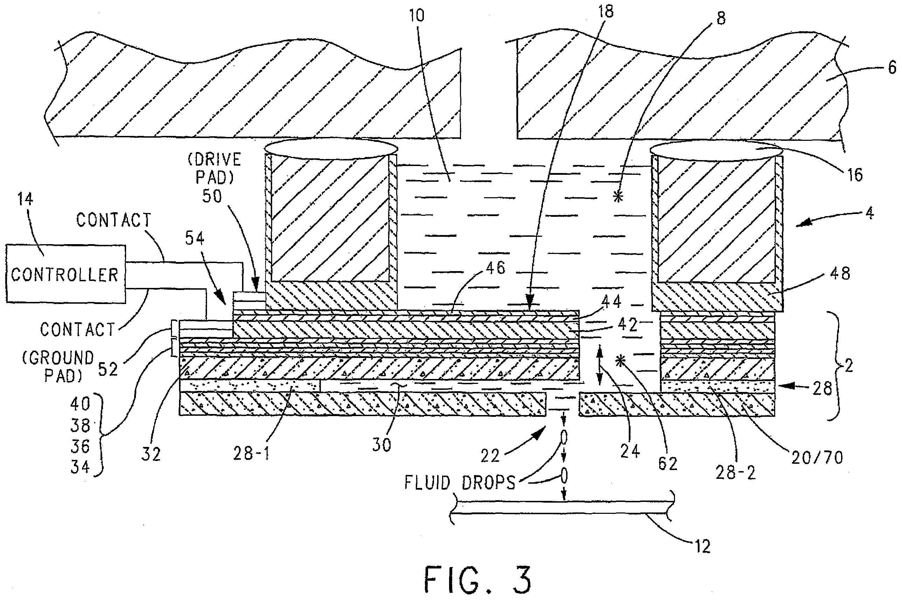

With reference to Figs. 2 and 3 and with continuing reference to Fig. 1, a cross section taken along line II-II in Fig. 1 shows input manifold 4 and one or more micro-valves 2 (only a single micro-valve 2 is shown in Figs. 2 and 3) defining a plenum or reservoir 8 that is configured to receive and hold a fluid 10, such as a liquid or a gas, e.g., a liquid ink, to be dispensed by said one or more micro-valves 2.

Carrier 6 can be formed of any suitable and/or desirable material such as, without limitation, plastic or ceramic. The purpose of carrier 6 is to act as a support for input manifold 4 and micro-valves 2 in operative relation to a substrate 12 on which fluid 10 is to be deposited by the operation of the one or more micro-valves 2 under the control of a controller 14 (Fig. 3) in a manner to be described hereinafter.

Ink input manifold 4 is pre-formed into a suitable shape and configuration that acts as an interface between one or more micro-valves 2 and carrier 6 and which cooperates therewith to form reservoir 8 for fluid 10. In one non-limiting embodiment, input manifold 4 is formed from 500 micrometer thick glass that has been formed into the pattern of the manifold by a suitable etching process, such as, without limitation, sandblasting. The description herein of input manifold 4 being made from glass, however, is not to be construed as limiting the invention. Similarly, the description of manifold being 500 micrometer thick is not to be construed as limiting the invention. In this regard, input manifold 4 can be suitable and/or desirable thickness and can be made from any material deemed suitable and/or desirable by one of ordinary skill in the art.

Input manifold 4 is coupled to carrier 6 via a seal 16. Seal 16 can be formed from adhesive material or an O-ring. The purpose of seal 16 is to form a fluid-tight seal between carrier 6 and input manifold 4 that avoids the escape or evaporation of fluid 10 from reservoir 8.

Each micro-valve 2 includes a cantilevered beam 18 disposed between input manifold 4 and an orifice plate 20, which is desirably formed from silicon but is not limited to silicon.

The thicknesses of input manifold 4 and the materials/layers forming the various embodiment micro-valves 2 shown in the figures are shown highly enlarged for the purpose of illustration. This is especially true for cantilevered beam 18 which, in practice, is sufficiently thin to permit at least a distal end of cantilevered beam 18 to move or bend toward and away from an orifice 22 in orifice plate 20, as shown, for example, by arrow 24 in Fig. 2.

In one embodiment, fluid 10 in manifold 8 is pressurized sufficiently such that it biases cantilevered beam 18 against orifice 22 as shown by dashed line 26 in Fig. 2. In this embodiment, cantilevered beam 18 in its unbiased (relaxed) state is spaced from orifice 22 as shown in solid line form in Figs. 2 and 3. In another embodiment, cantilevered beam 18 is configured such that in its unbiased (relaxed) state cantilevered beam 18 is biased against orifice 22, as shown by dashed line 26 in Fig. 2. Hence, cantilevered beam can be designed such that in its unbiased (relaxed) state, it is either spaced from orifice 22 or in contact with orifice 22.

If desired, a suitable fluid-tight seal can be formed at the interface where cantilevered beam 18 contacts orifice 22. Alternatively, the materials forming orifice plate 20 and the portion of cantilevered beam 18 in contact therewith can be selected such that these materials and/or the shape thereof seal orifice 22 and avoid the unintended passage of fluid 10 therethrough when cantilevered beam 18 is in the position shown by dashed line 26 in Fig. 2.

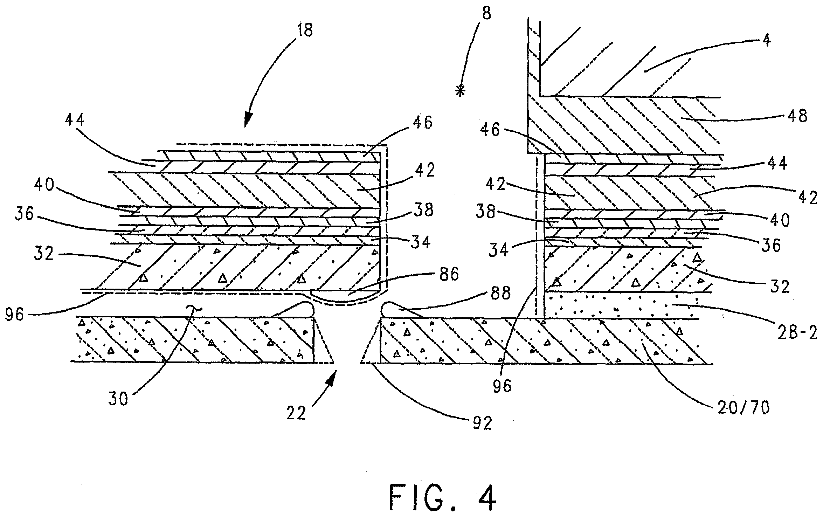

As shown in Fig. 4, the tip or distal end of cantilevered beam 18 facing orifice 22 can include an optional raised surface 86 which can be formed by additive (e.g., photolitographic) processing technique(s) and/or subtractive (e.g., etching) processing technique(s). For example, raised surface 86 can be formed at a suitable time by etching silicon layer 32 (discussed hereinafter). Also or alternatively, raised surface 86 can be formed by depositing a soft compliant material, such as, without limitation, gold, on silicon layer 32 at a suitable time. Combinations of additive and subtractive processing to form raised surface 86 are also envisioned.

Also or alternatively, and as also shown in Fig. 4, a raised surface 88 can be formed around the side of orifice 22 that faces cantilevered beam 18 by additive and/or subtractive processing technique(s) known in the art. For example, raised surface 88 can be formed by subtractive processing of silicon layer 70 forming orifice plate 20. Also or alternatively, raised surface 88 can be formed by depositing a compliant material, such as, without limitation, gold, around orifice 22 at a suitable time during processing of orifice plate 20. The combination of additive and subtractive processing to form raised surface 88 is also envisioned. Hereinafter, for the purpose of simplicity, raised surfaces 86 and 88 will not be described. However, it is to be understood that the use of raised surface 86, raised surface 88, or both raised surfaces 86 and 88 can be utilized with each instance of a micro-valve described herein.

Fluid 10 inside reservoir 8 can be at an elevated pressure by means of any typical means of pressurizing fluid 10, such as a fluid pump (not shown). Alternatively, fluid 10 can be at atmospheric pressure. The decision to have fluid 10 at atmospheric pressure or an elevated pressure is determined by whether cantilevered beam 18 in its relaxed state is in the open state shown by solid lines in Figs. 2 and 3 or the closed state shown by dashed line 26 in Fig. 2.

With continuing reference to Figs. 2 and 3, cantilevered beam 18, particularly the distal end of cantilevered beam 18, is positioned in spaced, operative relation to orifice 22 of orifice plate 20, e.g., via an adhesive 28 at a proximal end of cantilevered beam 18. Adhesive 28 can be deposited or formed in a manner to define sections 28-1 and 28-2 of adhesive 28 which can facilitate the formation of a gap 30 between orifice plate 20 and cantilevered beam 18 when assembled. Gap 30 enables the tip or distal end of cantilevered beam 18 adjacent orifice 22 to move in the directions shown by two-headed arrow 24 (Fig. 2) to seal orifice 22 when in the down position shown by dashed line 26 in Fig. 2 and to dispense fluid 10 via orifice 22 when in the up position shown in solid lines in Figs. 2 and 3.

One exemplary, non-limiting, embodiment of cantilevered beam 18 includes a 15 micrometer thick layer of silicon 32, a 1.2 micrometer thick layer of wet-thermal oxide (TOX) 34, a 100 nanometer thick layer of zirconium oxide (ZrO₂) 36, a 10 nanometer thick layer of titanium 38, a 100 nanometer thick layer of platinum 40, a 3-50 micrometer thick layer of piezoelectric material 42, such as, without limitation, lead zirconate titanate (PZT), another 10 nanometer thick layer of titanium 44, and finally a 250 nanometer thick layer of platinum 46. Layers 34-40, 44, and 46 can be deposited or formed or coupled together in any suitable and/or desirable manner. The above thicknesses of layers 32-46 are not to be construed as limiting the invention. Platinum layer 46 is coupled to the glass of input manifold 4 via an adhesive 48.

A drive pad 50 and a ground pad 52 are formed in electrical contact with platinum layer 46 and platinum layer 40 respectively. In the embodiment illustrated in Figs. 2 and 3, ground pad 52 is in contact with platinum layer 40 via a notch 54 defined in piezoelectric layer 42, titanium layer 44, and platinum layer 46 at the proximal end (or attachment end) of cantilevered beam 18 opposite orifice 22. Drive pad 50 is formed in contact with platinum layer 46 on the proximal end of cantilevered beam 18 opposite orifice 22. Drive pad 50 and ground pad 52 define the contacts for applying to piezoelectric layer 42 one or more electrical biases which cause piezoelectric layer 42 to move (bend) cantilevered beam 18 between the closed position covering orifice 22 (shown by dashed line 26 in Fig. 2) and the open position (shown by solid lines in Figs. 2 and 3) that permits pressurized fluid 10 in reservoir 8 to flow through orifice 22, or vice versa.

It has been observed that the thickness of TOX layer 34 will affect the deflection of cantilevered beam 18 when cantilevered beam 18 is not biased by an electrical bias applied to drive pad 50 and ground pad 52. For example, a thinner TOX layer 34 will cause cantilevered beam 18 to be in the position shown substantially in Figs. 2 and 3 when the piezoelectric layer 42 of cantilevered beam 18 is not electrically biased, i.e., in a relaxed state. In contrast, a thicker TOX layer 34 will cause cantilevered beam to be in the position shown substantially by dashed line 26 (covering orifice 22) when piezoelectric layer 42 is not electrically biased, i.e., in a relaxed state. Hence, by controlling the thickness of TOX layer 34, the curvature or bend (or lack thereof) of cantilevered beam 18 in the absence of an electrical bias applied to piezoelectric layer 42 can be controlled. In one particularly desirable embodiment, when piezoelectric layer 42 is not electrically biased, cantilevered beam 18 is in the closed position covering orifice 22 (shown by dashed line 26 in Fig. 2) and when piezoelectric layer 42 is electrically biased, cantilevered beam 18 assumes the position shown by solid lines in Figs. 2 and 3. However, this is not to be construed as limiting the invention since the opposite relationship of cantilevered beam 18 being in an open state and closed state when piezoelectric layer 42 is not biased and biased, respectively, is envisioned.

Also or alternatively, the as-deposited stress in one or more layers of cantilevered beam 18 can be purposefully modulated to a desired value and this can be used separately or in combination with thickness choice to effect the static beam bend or "curl".

ZrO₂ layer 36 acts as a barrier against migration contamination between Pt layer 40 and silicon layer 32. The disclosure of layer 36 being formed of ZrO₂, however, is not to be construed in a limiting sense as it is envisioned that any other suitable and/or desirable material that can act as a barrier against migration contamination between Pt layer 40 and silicon layer 32 can be used in replacement of ZrO₂ for the material of layer 36. Ti layer 38 acts as a seed or barrier layer for the deposition of platinum layer 40. Ti layer 38 facilitates adhesion of Pt layer 40. Ti layer 38 and Pt layer 40 define a first electrode of cantilevered beam 18.

Piezoelectric layer 42 can be formed from multiple layers of any suitable and/or desirable piezoelectric material, such as, without limitation, lead zirconate titanate (PZT), that is deposited in layers, e.g., via either via sputtering or other thin film deposition process or the well-known sol-gel process. After piezoelectric layer 42 has been deposited to a sufficient thickness, Ti layer 44 and Pt layer 46 are sequentially deposited atop of piezoelectric layer 42. Ti layer 44 acts as an adhesion layer between Pt layer 46 and piezoelectric layer 42. Ti layer 44 and Pt layer 46 define a second electrode of cantilevered beam 18.

An opening or hole 62 (Figs. 2 and 3) is formed in layers 32-46 in any suitable and/or desirable manner and notch 54 (Fig. 3) is formed by the removal of layers 42-46 opposite where opening 62 is formed.

Once cantilevered beam 18 is formed, input manifold 4, desirably made of glass, such as borosilicate glass that has been pre-formed into the form of input manifold 4, is mounted to Pt layer 46 via adhesive 48.

Orifice plate 20 is formed from a silicon layer or wafer 70 that has been etched to form orifice 22 of a desired size and/or dimensions.

At a suitable time, orifice plate 20 is mounted to the sections 28-1 and 28-2 of adhesive 28 with orifice 22 positioned in operative alignment with a tip or distal end of cantilevered beam 18. Desirably, the stack of layers 32-46 (that form cantilevered beam 18) to the left of orifice 22 and section 28-1 of adhesive 28 are sized whereupon gap 30 is formed and defined by the opposed surfaces of Si layer 32 and Si layer 70 held in spaced relation by section 28-1 of adhesive 28. In one non-limiting embodiment, orifice plate 20 and, hence, orifice 22 has a thickness of less than 100 micrometers, and orifice 22 has a diameter of less than 100 micrometers.

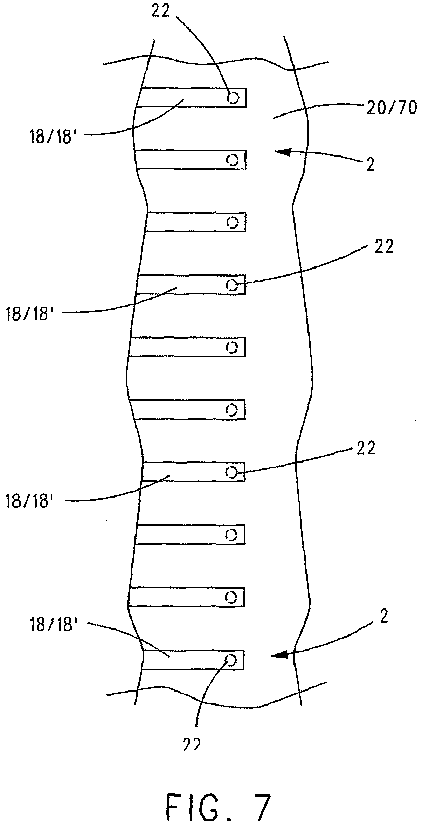

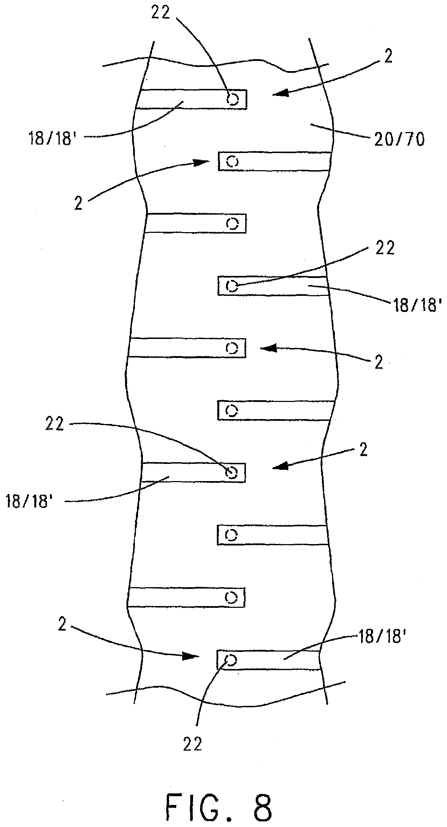

As discussed above, a single micro-valve 2 can be manufactured as a standalone device, or a number of micro-valves 2 side-by-side (Fig. 7) or interdigitated (Fig. 8) can be manufactured simultaneously utilizing standard MEMs and/or semiconductor processing techniques. The plurality of micro-valves 2 can be designed and manufactured in a way that enables each micro-valve to receive fluid 10 from the same plenum 8. In other words, a single plenum 8 can be utilized as a source of fluid 10 for a plurality of micro-valves 2.

In use, each cantilevered beam 18 is desirably in contact with and covers a corresponding orifice 22 in the orifice plate 20 (as shown by dashed line 26 in Fig. 2), either by design, e.g., via the thickness of TOX layer 34, or in response to pressurized fluid 10 in plenum. When it is desired to dispense fluid 10, e.g., ink drops, onto substrate 12, controller 14 applies (or withholds) a suitable drive signal to (or from) drive pad 50 while ground pad 52 is coupled to a return path of controller 14. In response to applying (or withholding) this drive signal, piezoelectric layer 42 causes cantilevered beam 18 to move or bend away from orifice 22 to the position shown by solid line in Figs. 2 and 3 whereupon fluid 10 in plenum 8 exits orifice 22. In response to termination (or reapplication) of the drive signal, cantilevered beam 18 returns to the position shown by dashed line 26 in Fig. 2 closing orifice 22 and terminating the flow of fluid 10 through orifice 22.

Where cantilevered beam 18 is designed to be in the curved or bent position shown by dashed line 26 in Fig. 2 covering and sealing orifice 22, fluid 10 at atmospheric pressure can be utilized in plenum 8, thereby avoiding the need to use pressurized fluid 10.

Herein, micro-valve 2 has been described in connection with dispensing fluid 10 downwardly. However, this is not to be construed as limiting the invention since it is envisioned that micro-valve 2 can be utilized in connection with pressurized fluid 10 in plenum 8, whereupon fluid 10 can be dispensed from orifice 22 in any direction, including upwardly. Moreover, while the present invention has been described in connection with the dispensing of fluid 10, such as a liquid, e.g., ink, it is to be appreciated that micro-valve 2 can be utilized for dispensing any other suitable and/or desirable fluid, including a gas. In the case where micro-valve 2 is utilized to dispense a gas, it is envisioned that cantilevered beam 18 in contact with and covering orifice 22 will form a gas-tight seal.

It is to be appreciated that micro-valve 2 described herein can be one of a number of micro-valves 2 formed on a common structure at the same time utilizing suitable semiconductor and/or MEMS processing techniques. If desired, this common structure can be separated in any suitable and/or desirable manner to provide individual micro-valves 2, or an X x Y array of micro-valves 2.

In the above description, layer 32 is described as being a silicon layer. Also or alternatively, layer 32 can be made from an electro-deposited metal, such as nickel. Thus, layer 32 can be formed completely of silicon, electro-deposited nickel, or a layer of electro-deposited nickel on a layer of silicon. The use of other materials for layer 32 is also envisioned.

The portion of orifice plate 20 around orifice 22 where cantilevered beam 18 contacts orifice plate 20 can be a flat surface (Figs. 2 and 3) or can have a raised surface 88 (Fig. 4). Also or alternatively, the area surrounding orifice 22 where cantilevered beam 18 contacts orifice plate 20 can include a compliant material, either as part of a flat surface or as part of raised surface 88 (Fig. 4) to improve sealing when cantilevered beam 18 is in the closed state.

As discussed above, by the appropriate selection of the thickness of TOX layer 34, micro-valve 2 can be formed to be in one of two states when an electrical bias is not applied to piezoelectric material 42, namely, a normally closed state where cantilevered beam covers orifice 22 (as shown by dashed line 26 in Fig. 2), or a normally open state where cantilevered beam 18 is spaced from orifice 22 (as shown in solid line in Figs. 2 and 3). In response to application of a suitable electrical bias to platinum layers 46 and 40 via pads 50 and 54, respectively, an electrical bias can be applied to piezoelectric layer 42 which can cause cantilevered beam 18 to transition or bend from the normally closed state (shown by dashed line 26 in Fig. 2) or normally open state (shown by solid lines in Figs. 2 and 3) to the open or closed state, respectively. In response to termination of the electrical bias to platinum layers 46 and 40, cantilevered beam 18 will return (bend) back to its normally closed or normally open state, as the case may be.

Desirably, the mass and stiffness of cantilevered beam 18 is designed to allow high frequency movement of cantilevered beam 18 between a closed position sealing orifice 22 and an open position which allows fluid 10 to be dispensed via orifice 22. This high frequency operation can be greater than 10 kHz, and desirably greater than 20 kHz. To facilitate this high frequency operation, silicon layer 32 desirably has a thickness less than 20 micrometers.

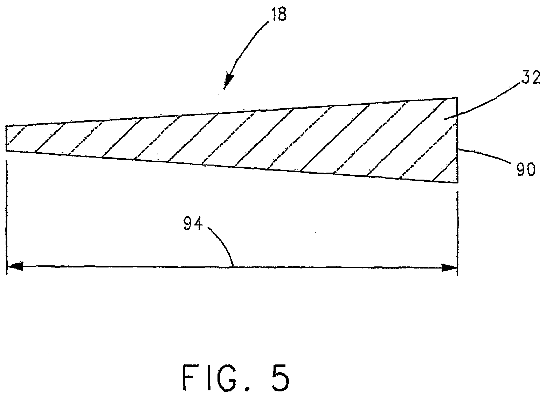

Desirably, cantilevered beam 18 has the trapezoidal shape (shown in Fig. 5) to improve the frequency of operation. Where cantilevered beam 18 has a trapezoidal shape, such as the trapezoidal shape shown in Fig. 5, the wide end 90 of the trapezoidal shape desirably is the distal end of cantilevered beam 18 disposed in plenum 8 above orifice 22.

As shown in Fig. 4, cantilevered beam 18 can include a raised surface 86 and/or a raised surface 88 can be formed around orifice 22 to improve sealing of orifice 22 and lessen the requirement of alignment between cantilevered beam 18 and the area of orifice plate 20 around orifice 22.

As shown by dashed line 92 in Fig. 4, orifice 22 can optionally be formed with a taper having a wide end facing plenum 8 and a narrow end facing away from plenum 8.

As shown in Fig. 5, the total length 94 of cantilevered beam 18 is desirably less than 1500 micrometers, more desirably less than 1000 micrometers and most desirably length 94 is between 700-1000 micrometers.

In the foregoing description, orifice 22 was formed in orifice plate 20 made from a layer of silicon 70. Hence, the seat for cantilevered beam 18 is silicon layer 70. However, it is envisioned that a polymer or polymers can be used as the seat for cantilevered beam 18 in replacement of silicon layer 70. It is also envisioned that at least the area of orifice plate 20 surrounding orifice 22 can optionally include a layer (not necessarily raised surface 88) of metal that acts as a seat for cantilevered beam 18 to facilitate forming a fluid-tight seal between cantilevered beam 18 in contact with orifice plate 20 sealing orifice 22. This metal valve seat may be formed from a layer of metal that has been laser ablated or chemically etched. Also or alternatively, this metal valve seat can be electroformed.

ZrO₂ layer 36 acts as a barrier to prevent chemical migration between silicon layer 32 and piezoelectric layer 42. While the exemplary embodiment of cantilevered beam has been described in connection with ZrO₂ layer 36 being 100 nanometers thick, it is envisioned that ZrO₂ layer 36 can be between 40 and 120 micrometers thick.

Where cantilevered beam 18 is designed to be in a normally closed state over orifice 22 (shown by dashed line 26 in Fig. 2), piezoelectric layer 42 desirably is designed and configured to move cantilevered beam 18 to the open state against a pressure of fluid of 15 psi (103,421 N/m²) or greater pressure in plenum 8.

Desirably, piezoelectric layer 42 is capable of sustaining an electric field applied thereto via layers 40 and 46 of up to 20 volts per micrometer.

The inkjet printer of Fig. 1 is comprised of an array of micro-valves 2 coupled to a carrier 6 via input manifold 4. This inkjet printer also includes additional components not shown and/or described herein that one of ordinary skill in the art would readily recognize as being necessary to the implementation of the inkjet printer, e.g., a frame which supports the micro-valves, carrier 6, input manifold 4 and controller 14 (Fig. 3). Controller 14 can include interface hardware and software that facilitates the connection of controller 14 to one or more external devices, e.g., a PC, a router, and the like, for receipt of data therefrom for printing by the inkjet printer.

The combination of micro-valves 2, carrier 6 and input manifold 4 in Fig. 1 define a multi-valve assembly that is comprised of an array of micro-valves 2. It is envisioned in practice that this multi-valve assembly can be a replaceable item of the inkjet printer. Hence, upon depletion of fluid 10 in the plenum 8 of a first multi-valve assembly, said first multi-valve assembly can be removed from the inkjet printer and replaced with a second multi-valve assembly that includes a full charge of fluid (e.g., ink) 10 in its plenum 8.

In a multi-valve assembly having a X x Y array of micro-valves, where X ≥ 1 and Y is ≥ 2, it is envisioned that the micro-valves desirably have the spacing of ≥ 90 micro-valves/inch (35 micro-valves per millimeter), more preferably ≥ 150 micro-valves/inch (59 micro-valves/millimeter), and most desirably ≥ 180 micro-valves/inch (71 micro-valves/millimeter).

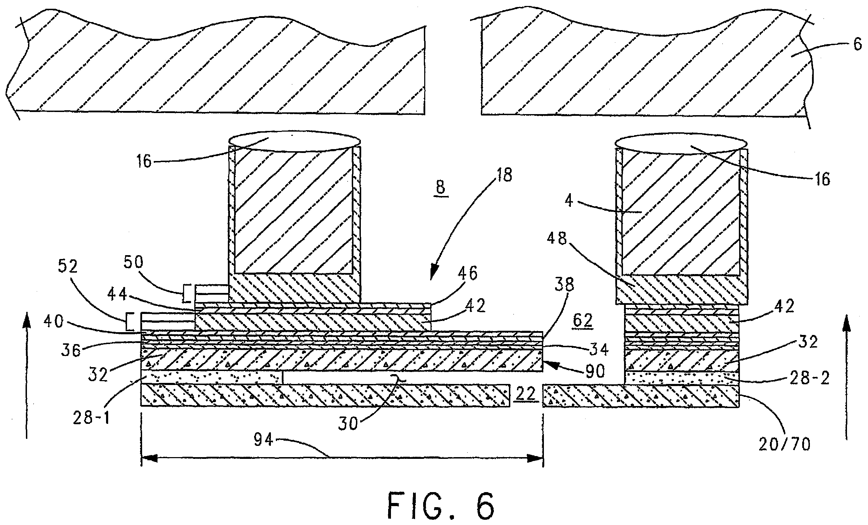

With reference to Fig. 6, a second embodiment micro-valve 2 omits portions of piezoelectric layer 42, titanium layer 44 and platinum layer 46 that are disposed in plenum 8 in the embodiment shown, for example, in Figs. 2 and 3. To this end, comparing the first embodiment micro-valve 2 shown in Figs. 2 and 3 to the second embodiment micro-valve 2 shown in Fig. 6, it can be seen that sections of piezoelectric layer 42, titanium layer 44 and platinum layer 46 at the distal (or tip) end of cantilevered beam 18 in Fig. 6 have been omitted from the first embodiment micro-valve 2 shown in Figs. 2 and 3. It is believed that the omission of these portions of piezoelectric layer 42, titanium layer 44 and platinum layer 46 in Fig. 6 will increase the operational frequency ability of cantilevered beam 18 to move into and out of contact with orifice 22. Other than the removal of the portions of piezoelectric layer 42, titanium layer 44 and platinum layer 46 in the second embodiment micro-valve 2 shown in Fig. 6, the first and second embodiment micro-valves 2 shown in Figs. 2, 3 and 6 are the same.

In addition to the omission of the portions of layers 42, 44, and 46 at the distal (or tip) end of cantilevered beam 18 discussed in the previous paragraph in connection with Fig. 6, it is also envisioned (but not shown in Fig. 6) that portions one or more of ZrO² layer 36, Ti layer 38, and/or Pt layer 40 at the distal (or tip) end of cantilevered beam 18 may also be omitted, e.g., in a manner similar to that shown in Fig. 6 for the omitted portions of layers 42, 44 and 46. However, this is not to be construed as in a limiting sense.

With reference to Fig. 9, a third embodiment micro-valve 2 includes cantilevered beam 18' which includes in addition to piezoelectric layer 42, another piezoelectric layer 42' on a side of silicon layer 32 opposite piezoelectric layer 42. More specifically, cantilevered beam 18' includes between silicon layer 32 and adhesive section 28-1 the following layers: ZrO₂ layer 36'; Ti layer 38'; Pt layer 40'; piezoelectric layer 42'; Ti layer 44'; and Pt layer 46'. Layers 36'-46' between silicon layer 32 and adhesive section 28-1 are essentially a mirror image of layers 36-46 on the other side of silicon layer 32. In a similar manner, layers 34-46 and layers 36'-46' are disposed on opposite sides of the portion of silicon layer 32 aligned with adhesive section 28-2.

The embodiment of cantilevered beam 18' shown in Fig. 9 includes drive pad 50 and ground pad 52 in contact with platinum layer 46 and platinum layer 40, respectively, like the embodiment of cantilevered beam 18 shown in Figs. 2 and 3. In addition, cantilevered beam 18' includes drive pad 50' and ground pad 52' in contact with platinum layer 46' and platinum layer 40', respectively. Comparing cantilevered beam 18' in Fig. 9 to cantilevered beam 18 in Fig. 3, it can be seen that the various layers 32-46 and 36'-46' of cantilevered beam 18' in Fig. 9 extend further to the left than layers 32-46 in the embodiment of cantilevered beam 18 shown in Fig. 3 to provide clearance for connecting controller 14 to drive pad 50' and ground pad 52'. In other words, layers 36'-46' extend sufficiently to the left in Fig. 9, and layers 42'-46' have a notch 54' formed therein, to facilitate the clearance-free mounting of drive pad 50' and ground pad 52' to Pt layer 46' and Pt layer 40', respectively.

Drive pad 50 and ground pad 52 are shown aligned vertically with drive pad 50' and ground pad 54'. However, this is not to be construed as limiting the invention since it is envisioned that drive pad 50 and ground pad 52 can be coupled at any suitable and/or desirable locations between the locations shown in Fig. 9 and the locations shown in Fig. 2 for cantilevered beam 18.

The operation of cantilevered beam 18' is similar to the operation of cantilevered beam 18 described above except that controller 14 can apply (or withhold) one or more suitable drive signals to drive pad 50, drive pad 50', or both drive pad 50 and drive pad 50' while ground pads 52 and 52' are coupled to one or more return path(s) of controller 14. In response to applying (or withholding) such drive signal(s) to drive pad 50, drive pad 50', or both drive pads 50 and 50' at the same time, piezoelectric layer 42, piezoelectric layer 42', or piezoelectric layers 42 and 42' in concert cause cantilevered beam 18' to move or bend from a starting position to a position toward (and into contact with) or away from orifice 22. In response to termination (or reapplication) of the drive signal(s) to drive pad 50, drive pad 50', or both drive pads 50 and 50', cantilevered beam 18' returns to its starting position, i.e., either spaced from orifice 22 or in contact with and covering orifice 22. More specifically, in response to respective application and termination of an electrical signal to piezoelectric layer 42 or piezoelectric layer 42' cantilevered beam 18' either (1) moves from a starting position spaced from orifice plate 20 toward the orifice plate 20 and returns back to its starting position spaced from the orifice plate, or (2) moves from a starting position adjacent the orifice plate 20 away from orifice plate 20 and returns back to the starting position adjacent orifice plate 20.

Alternatively, cantilevered beam 18' is responsive to either application of a first electrical signal to one of the pair of piezoelectric layers 16 or 16' to either (1) bend from the starting position spaced from orifice plate 20 toward orifice plate 20, and termination of the first electrical signal and application of a second electrical signal to the other of the pair of piezoelectric layers 16 or 16' to return back to the starting position spaced from orifice plate 20, or (2) application of the first electrical signal to one of the pair of piezoelectric layers 16 or 16' to bend from the starting position adjacent orifice plate 20 away from orifice plate 20, and termination of the first electrical signal an application of a second electrical signal to the other of the pair of piezoelectric layers 16 or 16' to return back to the starting position adjacent orifice plate 20.

Like the embodiments of cantilevered beams 18 discussed above, the thickness of TOX layer 34 in the embodiment of cantilevered beam 18' can be selected such that either the distal end of cantilevered beam 18' is spaced from orifice 22 or the distal end of cantilevered beam 18', particularly platinum layer 46', contacts and seals orifice 22, as shown by dashed line 26 in Fig. 9. Hence, by suitable selection of the thickness of TOX layer 34, cantilevered 18' can be designed such that in its unbiased (relaxed) state, it is either spaced from orifice 22 or in contact with and sealing orifice 22.

With reference to Fig. 10, a fourth embodiment micro-valve 2 omits portions of piezoelectric layers 42 and 42', titanium layers 44 and 44', and platinum layers 46 and 46' that are disposed in plenum 8 in the embodiment of cantilevered beam 18' shown in Fig. 9. To this end, comparing the third and fourth embodiment cantilevered beams 18' shown in Figs. 9 and 10, it can be seen that sections of piezoelectric layers 42 and 42', titanium layers 44 and 44', and platinum layers 46 and 46' at the distal (or tip) end of the third embodiment cantilevered beam 18' in Fig. 9 have been omitted from the fourth embodiment cantilevered beam 18' shown in Fig. 10. It is believed that the omission of these portions of piezoelectric layers 42 and 42', titanium layers 44 and 44', and platinum layers 46 and 46' in Fig. 10 will increase the operational frequency ability of the fourth embodiment cantilevered beam 18' (Fig. 10) to move into and out of contact with orifice 22. Other than the removal of portions of piezoelectric layers 42 and 42', titanium layers 44 and 44', and platinum layers 46 and 46' in the fourth embodiment cantilevered beam shown in Fig. 10, the third and fourth embodiment cantilevered beam 18' shown in Figs. 9 and 10 are the same. Alternatively, the fourth embodiment cantilevered beam 18' can include layers 42'-46' extending to the distal end of layers 34, 36, 32, 36', 38' and 40', whereupon only layers 38-46 are omitted from the end of cantilevered beam 18' shown in Fig. 10.

Fig. 7 is an isolated plan view of a plurality of micro-valves 2 including a plurality of cantilevered beams 18 or 18' positioned side-by-side above nozzles 22 (shown in phantom) formed in orifice plate 20. Fig. 8 is an isolated plan view of a plurality of micro-valves 2 including a plurality of interdigitated cantilevered beams 18 or 18' positioned above nozzles 22 (shown in phantom) formed in orifice plate 20. This latter arrangement of micro-valves 2 having their cantilevered beams formed with their bases away from each other and the tips of the cantilevered beams interdigitated facilitates spacing between each micro-valve of greater than 150 micro-valves per inch (59 micro-valves per millimeter). The cantilevered beams shown in Figs. 7-8 are rectangular shaped. However, this is not to be construed as limiting the invention since each micro-valve can have any shape deemed suitable and/or desirable by one of ordinary skill in the art, including the trapezoidal shape shown in Fig. 5, a polygon shape, a curvilinear shape, or some combination of said shapes.

Referring back to Fig. 4, if desired, micro-valve(s) 2 can include a passivation layer 96 (shown in phantom) formed on the interior surface(s) thereof that will come into contact with fluid 10. Layer 96 permits micro-valve(s) 2, including any embodiment cantilevered beam described herein, to be utilized with a wide variety of fluids or gases 10.

The micro-valve system discussed above, comprised of a plurality of micro-valves 2, carrier 6 and input manifold 4, can be built into a replaceable or removable printhead 98 (Fig. 1) that includes one or more electrical interfaces 100, one or more alignment surfaces 102 and, optionally, one or more fluid interfaces 104. The one or more electrical interfaces 100 facilitate electrical connection of the micro-valve system to one or more external devices. The one or more alignment surfaces 102 facilitate alignment of the micro-valve system in a carriage or frame of a device, such as an inkjet printer. Lastly, the one or more fluid interfaces 104 facilitate the optional connection of the micro-valve system to a source of fluid to be dispensed.

Lastly, it is believed that the above-described embodiments of micro-valve 2 are capable of dispensing ink drops having a volume between 1-600 picoliters.

As can be seen, disclosed herein is an inkjet printer comprised of a micro-valve system that includes one or more micro-valves 2 coupled to a carrier 6 via an input manifold 4. Each micro-valve 2 includes a cantilevered 18 or 18' disposed between input manifold 4 and an orifice plate 20. Each cantilevered beam 18 or 18' is desirably positioned in alignment with one or more orifices 22 in orifice plate 20. In the figures, the thicknesses of manifold 14 and the thicknesses of the materials/layers forming micro-valve 2 are shown highly enlarged for the purpose of illustration. This is especially true for each instance of cantilevered beam 18 and 18' which, in practice, is sufficiently thin to permit at least a distal end of said cantilevered beam to move or bend toward and away from each orifice 22 in orifice plate 20 in alignment with said cantilevered beam, as shown by arrows 24 for a single orifice 22 in Figs. 2, 9 and 10.

In one implementation, each embodiment of cantilevered beam 18 and 18' described herein can be biased against one or more orifices 22 in alignment with said cantilevered beam (as shown by dashed lines 26 and 26' for a single orifice 22 in Figs. 2, 9 and 10) in response to pressurized fluid 10 in manifold 8. In this implementation, each embodiment cantilevered beam 18 and 18', in its unbiased (relaxed) state is spaced from the one or more orifices 22. In another implementation, each instance of cantilevered beam 18 and 18' is configured such that in its unbiased state, said cantilevered beam is against (and sealing) each orifice 22 in alignment with said cantilevered beam.

A suitable seal can be formed at the interface where each embodiment cantilevered beam 18 and 18' contacts each orifice 22 in alignment with said cantilevered beam. Alternatively, the materials forming orifice plate 20 and the portion of the cantilevered beam 18 or 18' in contact therewith can be selected such that these materials and/or the shape thereof seal each orifice 22 in alignment with said cantilevered beam, avoiding the unintended passage of fluid 10 therethrough when the cantilevered beam is in the position shown by dashed lines 26 in Figs. 2, 9 and 10.

The tip or distal end of each embodiment cantilevered beam 18 and 18' facing each orifice 22 can include an optional raised surface which can be formed by additive and/or subtractive processing techniques. Also or alternatively, as shown, for example, in Fig. 4, a raised surface 88 can be formed around the side of each orifice 22 that faces any embodiment cantilevered beam 18 and 18' by additive and/or subtractive processing techniques.

With the exception of the introduction of layers 36'-46', drive pad 50', and ground pad 52', in the embodiments of cantilevered beam 18' shown in Figs. 9 and 10, the layers of material forming the embodiments of cantilevered beams 18 shown in Figs. 2 and 6 are the same as the embodiments of cantilevered beam 18' shown in Figs. 9 and 10. Of course, the embodiments of cantilevered beam 18' shown in Figs. 9 and 10 can have other geometrical differences from the embodiments of cantilevered beams 18 shown in Figs. 2 and 6, which differences are apparent from the figures.

The exemplary thicknesses of layers 36-46 discussed above are also applicable to layers 36'-46'. However, the thicknesses of layers 36-46 and, hence, layers 36'-46', described herein are not to be construed as limiting the invention.

In the third and fourth embodiment cantilevered beams 18' shown in Figs. 9 and 10, ZrO₂ layer 36 and/or ZrO₂ layer 36' act as barriers against migration between Pt layers 40 and 40' and silicon layer 32. Ti layer 38' facilitates adhesion of Pt layer 40'. Similarly, Ti layer 44' acts as an adhesion layer between Pt layer 46' and piezoelectric layer 42'. Ti layer 38 and Pt layer 40 define a first electrode of cantilevered beam 18'. Ti layer 44 and Pt layer 46 define a second electrode of cantilevered beam 18'. Ti layer 38' and Pt layer 40' define a third electrode of cantilevered beam 18'. Ti layer 44' and Pt layer 46' define a fourth electrode of cantilevered beam 18'.

In the embodiments of cantilevered beams 18' shown in Figs. 9 and 10, an opening or hole 62 is formed in layers 32-46 and 36'-46' in any suitable and/or desirable manner and notch 54' is formed by the removal of layers 42'-46' opposite where opening 62 is formed.

With continuing reference to Figs. 9 and 10, once each embodiment of cantilevered beam 18' is formed, input manifold 4 can be mounted to Pt layer 46 via adhesive 48. At a suitable time orifice plate 20, including one or more orifices 22, is mounted to sections 28-1 and 28-2 of adhesive 28 with each orifice 22 positioned in operative alignment with a tip or distal end of one instance of cantilevered beam 18' shown in Figs. 9 and 10. Desirably, the stack of layers 32-46 and 36'-46' (that form each embodiment cantilevered beam 18' shown in Figs. 9 and 10) to the left of orifice 22 and section 28-1 of adhesive 28 are sized whereupon gap 30 is formed and defined by opposed surfaces of Pt layer 46' and Si layer 70 held in spaced relation by section 28-1 of adhesive 28. In one non-limiting embodiment, orifice plate 20 and, hence, orifice 22 has a thickness of less than 100 micrometers, and orifice 22 has a diameter of less than 100 micrometers.

A single micro-valve 2 can be manufactured as a standalone device, or a number of micro-valves including cantilevered beam(s) 18 and/or 18' can be manufactured side by side (Fig. 7) or interdigitated (Fig. 8) utilizing standard MEMs and/or semiconductor processing techniques. Desirably, a single plenum 8 can be utilized as a source of fluid for a plurality of micro-valves 2. However, this is not to be construed as limiting the invention.

Where the embodiments of cantilevered beam 18' shown in Figs. 9 and 10 are designed to be in the curved or bent position (shown by dashed lines 26 covering and sealing orifice 22), fluid 10 at atmospheric pressure can be utilized in plenum 8, thereby avoiding the need to use pressurized fluid.

The various embodiment micro-valves 2 described herein can be utilized to dispense fluid downwardly. Where fluid 10 is pressurized in plenum 8, each embodiment micro-valve 2 described herein that includes a different embodiment cantilevered beam 18 or 18', can be utilized to dispense fluid from one or more orifices 22 in any direction, including upwardly. It is to be appreciated that each embodiment cantilevered beam 18 or 18' disclosed herein defines a different embodiment micro-valve. For example, a first embodiment micro-valve 2 includes cantilevered beam 18 shown in Figs. 2 and 3; a second embodiment micro-valve includes cantilevered beam 18 shown in Fig. 6; a third embodiment micro-valve includes cantilevered beam 18' shown in Fig. 9; lastly, a fourth embodiment micro-valve includes cantilevered beam 18' shown in Fig. 10.

Each embodiment micro-valve 2 can be utilized for dispensing any suitable and/or desirable fluid 10. Where an embodiment of micro-valve 2 is utilized to dispense gas, it is envisioned that each embodiment cantilevered beam 18 and 18' will, in its unbiased state, be in contact with and covering one or more orifices 22 to form a gas-tight seal with each orifice 22. Each embodiment micro-valve 2 described herein can be one of a number of micro-valves 2 formed as a common substrate at the same time utilizing suitable semiconductor and/or MEMs processing techniques. If desired, this common structure can be separated in any suitable and/or desirable manner to provide individual micro-valves 2, or an X x Y array of micro-valves 2.

As discussed above, layer 32 can be formed completely of silicon, electro-deposited nickel, or a layer of electro-deposited nickel on a layer of silicon. The portion of orifice plate 20 around each orifice 22 where any embodiment cantilevered beam 18 and 18' would contact orifice plate 20 can be a flat surface or can have a raised surface, such as raised surface 88 in Fig. 4. Also or alternatively, the area surrounding each orifice 22 where any embodiment cantilevered beam 18 and 18' would contact orifice plate 20 can include a compliant material, either as part of a flat surface or as part of a raised surface, such as raised surface 88 in Fig. 4, to improve sealing when said cantilevered beam is in the closed state.

The appropriate selection of the thickness of TOX layer 34 of each embodiment micro-valve 18 and 18' described herein enables the corresponding micro-valve to be formed in one of two states when electrical bias is not applied to piezoelectric material 42, piezoelectric material 42', or piezoelectric materials 42 and 42', namely, a normally closed state where said cantilevered beam covers one or more orifices 22 (as shown for a single orifice 22 by dashed lines 26 in Figs. 2, 9 and 10), or a normally open state where said cantilevered beam is spaced from said one or more orifices 22 as shown in solid lines in Figs. 2, 3, 9 and 10.

Desirably, the mass and thickness of each embodiment cantilevered beam 18 and 18' is designed to allow high frequency movement thereof between a closed position sealing one or more orifices 22 and an open position which allows fluid 10 to be dispensed via said one or more orifices 22. This high frequency operation can be greater than 10 kHz, and desirably greater than 20 kHz. To facilitate this high frequency operation, silicon layer desirably has a thickness less than 20 micrometers.

Each embodiment cantilevered beam 18 and 18' can have a trapezoidal shape (Fig. 5) to improve the frequency of operation. For an embodiment of cantilevered beam having a trapezoidal shape, the wide end 90 of the trapezoidal shape desirably is the distal end of the cantilevered beam disposed in plenum 8 above at least one orifice 22. The total length 94 of each embodiment cantilevered beam is desirably less than 1500 micrometers, more desirably less than 1000 micrometers, and most desirably length 94 is between 700-1000 micrometers.

In the foregoing description, each orifice 22 was formed in orifice plate 20 made from a layer of silicon 70. Hence, the seat for each embodiment cantilevered beam 18 and 18' is silicon layer 70. However, it is envisioned that a polymer or polymers can be used as the seat for cantilevered beam 18 in replacement of silicon layer 70. It is also envisioned that at least the area of orifice plate 20 surrounding each orifice 22 can include a layer (not shown) of metal that acts as a seat for said cantilevered beam to facilitate forming a fluid tight seat between said cantilevered beam in contact with orifice plate 20 sealing said orifice 22. This metal valve seat may be formed from a layer of metal that has been laser ablated, chemically etched, or electroformed.

Where an embodiment cantilevered beam 18 or 18' is designed, in its unbiased state, to be in a normally closed state over one or more orifices orifice 22 (shown by dashed lines 26 in Figs. 2, 9 and 10), one or more of piezoelectric layers 42 and/or 42' can be designed and configured to move cantilevered beam 18 or 18' to the open state against a pressure of fluid of 15 psi (103,421 N/m²) or greater pressure in plenum 8. Desirably, each piezoelectric layer 42 and/or 42' is capable of sustaining an electric field applied thereto of up to 20 volts per micrometer.

Each micro-valve 2 of the inkjet printer of Fig. 1 can include any embodiment cantilevered beam 18 or 18' described herein. Any combination of different embodiment micro-valves 2 having different embodiment cantilevered beams 18 and 18' are also envisioned. For example, one micro-valve 2 of an array of micro-valves 2 can include the first embodiment cantilevered beam 18 shown in Fig. 2; another micro-valve 2 of the array of micro-valves 2 can include the second embodiment cantilevered beam 18 shown in Fig. 6; another micro-valve 2 of the array of micro-valves 2 can include the third embodiment cantilevered beam 18' shown in Fig. 9; and/or another micro-valve 2 of the array of micro-valves 2 can include the fourth embodiment cantilevered beam 18' shown in Fig. 10.

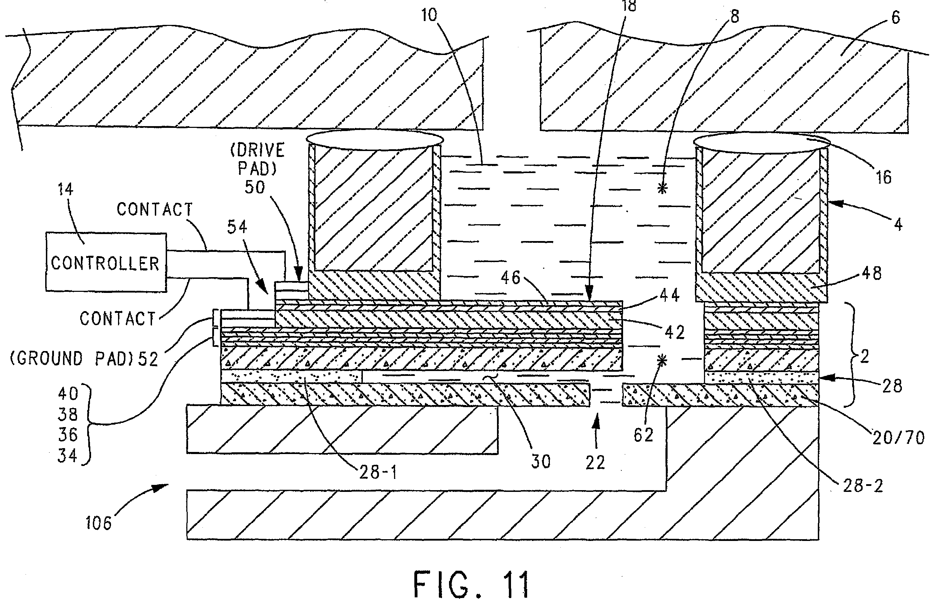

With reference to Fig. 11, an output manifold 106 may be coupled to the output side of orifice plate 20 in any of the embodiment micro-valves 2 discussed herein to collect the output of each micro-valve 2 and direct it to other locations, such as a mixing chamber (not shown) or output port (not shown). In this regard, it is envisioned that output manifold 106 can be segmented, with each segment of output manifold 106 holding a different fluid 10. The fluid in each segment of a segmented input manifold 4 can be dispensed via one or more micro-valves 2 coupled thereto to output manifold 106 for mixing in a mixing chamber or combining in an output port.

The present invention has been described with reference to an exemplary embodiment. Obvious modifications and alterations will occur to others upon reading and understanding the preceding detailed description. It is intended that the invention be construed as including all such modifications and alterations insofar as they come within the scope of the appended claims.

## Claims

1. A micro-valve system comprising:
a single micro-valve (2) or an array of micro-valves (2), a carrier (6) and an input manifold (4), the micro-valve or the array of micro-valves being coupled to the carrier (6) via the input manifold (4), the micro-valve system further comprising an orifice plate (20) including an orifice (22) which is configured to dispense a fluid; and each micro-valve (2) including a cantilevered beam (18) coupled in spaced relation to the orifice plate (20) and moveable between positions where the orifice (22) is closed and opened by the cantilevered beam (18), wherein:
the cantilevered beam (18) is comprised of one or more piezoelectric layers (42) that facilitate bending of the cantilevered beam (18) in response to the application of one or more electrical signals to the one or more piezoelectric layers (42); and
wherein
application of the one or more electrical signals to the one or more piezoelectric layers (42), causes the cantilevered beam (18) to move from a curved starting position covering and sealing the orifice (22) away from the orifice plate (20) and wherein termination of the one or more electrical signals to the one or more piezoelectric layers (42) causes the cantilevered beam (18) to return back to the curved starting position covering and sealing the orifice (22) based on a mechanical bias of the cantilevered beam (18), **characterised in that** at least a portion of the mechanical bias is generated by the fluid at atmospheric pressure,
wherein the cantilevered beam (18) further includes a layer of material that causes the cantilevered beam (18) to have a bend in the absence of the one or more electrical signals being applied to the one or more piezoelectric layers (42).

2. The micro-valve system of claim 1, wherein the cantilevered beam (18) includes a pair of piezoelectric layers (42) that are spaced from each other and spaced from the orifice plate (20), wherein termination of the first electrical signal further comprises application of a second electrical signal to the other of the pair of piezoelectric layers (42) to return back to the curved starting position covering and sealing the orifice (22).

3. The micro-valve system of claim 1, wherein the cantilevered beam (18) at its proximal end is coupled to the orifice plate (20) and the cantilevered beam (18) at its distal end is moveable between positions where the orifice (22) is closed and opened.

4. The micro-valve system of claim 1, wherein:
the cantilevered beam (18) includes a plurality of layers; and
in plan view, at least one of the layers of the cantilevered beam (18) has one or a combination of the following shapes: rectangular, trapezoidal, polygon and curvilinear.

5. The micro-valve system of claim 1, further including:
a plurality of orifices (22) in the orifice plate (20); and
a plurality of the cantilevered beams (18) disposed in spaced relation to the orifice plate (20), wherein each cantilevered beam (18) is moveable between positions where one of the plurality of orifices (22) is closed and opened by said cantilevered beam (18).

6. The micro-valve system of claim 1, further including an output manifold coupled to a side of the orifice plate (20) opposite the cantilevered beam (18).

7. A micro-valve system of claim 1, wherein at least one of the piezoelectric layers (42) does not extend to a distal end of the cantilever beam (18).

8. A printhead (98) comprising:
the micro-valve system of claim 1 including the input manifold; and
a plurality of micro-valves coupled to the input manifold.

9. The printhead (98) of claim 8, wherein at least one cantilevered beam (18) includes a pair of piezoelectric layers (42) that are spaced from each other and spaced from the orifice plate (20), wherein termination of the first electrical signal further comprises application of a second electrical signal to the other of the pair of piezoelectric layers (42) to return back to the starting position covering and sealing the orifice (22).

10. The printhead (98) of claim 8, wherein each cantilevered beam (18) at its proximal end is coupled between the orifice plate (20) and the input manifold and at its distal end is moveable between positions where one of the orifices (22) is closed and opened.

11. The printhead (98) of claim 8, wherein each cantilevered beam (18) bending toward the orifice plate (20) closes one of the orifices (22).

12. The printhead (98) of claim 8, wherein each cantilevered beam (18) further includes a first layer of silicon or inert material, said first layer including thereon a second layer of material that causes the cantilevered beam (18) to bend in the absence of the electrical signal being applied to the cantilevered beam (18).

## Patentansprüche

1. Mikroventilsystem, umfassend:
ein einzelnes Mikroventil (2) oder eine Anordnung von Mikroventilen (2), einen Träger (6) und einen Eingangsverteiler (4), wobei das Mikroventil oder die Anordnung von Mikroventilen über den Eingangsverteiler (4) mit dem Träger (6) gekoppelt ist, das Mikroventilsystem ferner umfassend eine Lochplatte (20), die ein Loch (22) beinhaltet, das konfiguriert ist, um ein Fluid abzugeben; und wobei jedes Mikroventil (2) einen freitragenden Träger (18) beinhaltet, der in einer beabstandeten Beziehung mit der Lochplatte (20) gekoppelt ist und zwischen Positionen bewegbar ist, in denen das Loch (22) durch den freitragenden Träger (18) geschlossen und geöffnet wird, wobei:
der freitragende Träger (18) aus einer oder mehreren piezoelektrischen Schichten (42) besteht, die ein Biegen des freitragenden Trägers (18) als Reaktion auf das Anlegen eines oder mehrerer elektrischer Signale an die eine oder mehreren piezoelektrischen Schichten (42) ermöglichen; und
wobei das Anlegen des einen oder der mehreren elektrischen Signale an die eine oder die mehreren piezoelektrischen Schichten (42) bewirkt, dass sich der freitragende Träger (18) aus einer gekrümmten Ausgangsposition, in der er das Loch (22) abdeckt und abdichtet, von der Lochplatte (20) wegbewegt und wobei eine Beendigung des einen oder der mehreren elektrischen Signale an die eine oder die mehreren piezoelektrischen Schichten (42) bewirkt, dass der freitragende Träger (18) in die gekrümmte Ausgangsposition zurückkehrt und das Loch (22) basierend auf einer mechanischen Vorspannung des freitragenden Trägers (18) abdeckt und abdichtet, **dadurch gekennzeichnet, dass** zumindest ein Teil der mechanischen Vorspannung durch das Fluid bei atmosphärischem Druck erzeugt wird,
wobei der freitragende Träger (18) ferner eine Materialschicht beinhaltet, die bewirkt, dass der freitragende Träger (18) eine Biegung aufweist, wenn des eine oder die mehreren elektrischen Signale nicht an die eine oder die mehreren piezoelektrischen Schichten (42) angelegt werden.

2. Mikroventilsystem nach Anspruch 1, wobei der freitragende Träger (18) ein Paar piezoelektrischer Schichten (42) aufweist, die voneinander und von der Lochplatte (20) beabstandet sind, wobei eine Beendigung des ersten elektrischen Signals ferner ein Anlegen eines zweiten elektrischen Signals an die andere von dem Paar piezoelektrischer Schichten (42) umfasst, um in die gekrümmte Ausgangsposition zurückzukehren, die das Loch (22) abdeckt und abdichtet.

3. Mikroventilsystem nach Anspruch 1, wobei der freitragende Träger (18) an seinem proximalen Ende mit der Lochplatte (20) gekoppelt ist und der freitragende Träger (18) an seinem distalen Ende zwischen Positionen bewegbar ist, in denen das Loch (22) geschlossen und geöffnet wird.

4. Mikroventilsystem nach Anspruch 1, wobei:
der freitragende Träger (18) eine Vielzahl von Schichten beinhaltet; und
in der Draufsicht mindestens eine der Schichten des freitragenden Trägers (18) eine oder eine Kombination der folgenden Formen aufweist: rechteckig, trapezförmig, polygon und krummlinig.

5. Mikroventilsystem nach Anspruch 1, ferner umfassend:
eine Vielzahl von Löchern (22) in der Lochplatte (20); und
eine Vielzahl von freitragenden Trägern (18), die in beabstandeter Beziehung zu der Lochplatte (20) angeordnet sind, wobei jeder freitragende Träger (18) zwischen Positionen bewegbar ist, in denen eine der Vielzahl von Löchern (22) durch den freitragenden Träger (18) geschlossen und geöffnet wird.

6. Mikroventilsystem nach Anspruch 1, das ferner einen Ausgangsverteiler beinhaltet, der mit einer Seite der Lochplatte (20) gegenüber dem freitragenden Träger (18) gekoppelt ist.

7. Mikroventilsystem nach Anspruch 1, wobei sich mindestens eine der piezoelektrischen Schichten (42) nicht bis zu einem distalen Ende des freitragenden Trägers (18) erstreckt.

8. Druckkopf (98), umfassend:
das Mikroventilsystem nach Anspruch 1, das den Eingangsverteiler beinhaltet; und
eine Vielzahl von Mikroventilen, die mit dem Eingangsverteiler gekoppelt sind.

9. Druckkopf (98) nach Anspruch 8, wobei mindestens ein freitragender Träger (18) ein Paar piezoelektrische Schichten (42) beinhaltet, die voneinander und von der Lochplatte (20) beabstandet sind, wobei eine Beendigung des ersten elektrischen Signals ferner ein Anlegen eines zweiten elektrischen Signals an die andere von dem Paar piezoelektrischer Schichten (42) umfasst, um in die Ausgangsposition zurückzukehren, die das Loch (22) abdeckt und abdichtet.

10. Druckkopf (98) nach Anspruch 8, wobei jeder freitragende Träger (18) an seinem proximalen Ende zwischen der Lochplatte (20) und dem Eingangsverteiler gekoppelt ist und an seinem distalen Ende zwischen Positionen bewegbar ist, in denen eines der Löcher (22) geschlossen und geöffnet wird.

11. Druckkopf (98) nach Anspruch 8, wobei jeder freitragende Träger (18), der sich in Richtung der Lochplatte (20) biegt, eines der Löcher (22) schließt.

12. Druckkopf (98) nach Anspruch 8, wobei jeder freitragende Träger (18) ferner eine erste Schicht aus Silizium oder inertem Material beinhaltet, wobei die erste Schicht eine zweite Schicht aus einem Material beinhaltet, das bewirkt, dass sich der freitragende Träger (18) biegt, wenn kein elektrisches Signal an den freitragenden Träger (18) angelegt ist.

## Revendications

1. Système de microvalve comprenant :
une seule microvalve (2) ou un réseau de microvalves (2), un support (6) et un collecteur d'entrée (4), la microvalve ou le réseau de microvalves étant couplé au support (6) par l'intermédiaire du collecteur d'entrée (4), le système de microvalve comprenant en outre une plaque à orifices (20) comprenant un orifice (22) qui est configuré pour distribuer un fluide ; et chaque microvalve (2) comprenant une poutre en porte-à-faux (18) couplée de manière espacée à la plaque à orifices (20) et mobile entre des positions où l'orifice (22) est fermé et ouvert par la poutre en porte-à-faux (18), dans lequel :
la poutre en porte-à-faux (18) est composée d'une ou plusieurs couches piézoélectriques (42) qui facilitent la flexion de la poutre en porte-à-faux (18) en réponse à l'application d'un ou plusieurs signaux électriques à la ou aux couches piézoélectriques (42) ; et
dans lequel l'application de l'un ou plusieurs signaux électriques à l'une ou plusieurs couches piézoélectriques (42) provoque le déplacement de la poutre en porte-à-faux (18) à partir d'une position de départ incurvée recouvrant et obturant l'orifice (22) à l'écart de la plaque à orifices (20) et dans lequel la terminaison de l'un ou plusieurs signaux électriques à l'une ou plusieurs couches piézoélectriques (42) provoque le retour de la poutre en porte-à-faux (18) à la position de départ incurvée recouvrant et obturant l'orifice (22) sur la base d'une sollicitation mécanique de la poutre en porte-à-faux (18), **caractérisé en ce qu'**au moins une partie de la sollicitation mécanique est générée par le fluide à la pression atmosphérique,
dans lequel la poutre en porte-à-faux (18) comprend en outre une couche de matériau qui fait que la poutre en porte-à-faux (18) présente une courbure en l'absence d'un ou plusieurs signaux électriques appliqués à la ou aux couches piézoélectriques (42).

2. Système de microvalve selon la revendication 1, dans lequel la poutre en porte-à-faux (18) comprend une paire de couches piézoélectriques (42) qui sont espacées l'une de l'autre et espacées de la plaque à orifices (20), dans lequel la terminaison du premier signal électrique comprend en outre l'application d'un second signal électrique à l'autre de la paire de couches piézoélectriques (42) pour revenir à la position de départ incurvée recouvrant et obstruant l'orifice (22).

3. Système de microvalve selon la revendication 1, dans lequel la poutre en porte-à-faux (18) au niveau de son extrémité proximale est couplée à la plaque à orifices (20) et la poutre en porte-à-faux (18) au niveau de son extrémité distale est mobile entre des positions où l'orifice (22) est fermé et ouvert.

4. Système de microvalve selon la revendication 1, dans lequel :
la poutre en porte-à-faux (18) comprend une pluralité de couches ; et
dans une vue en plan, au moins l'une des couches de la poutre en porte-à-faux (18) a l'une ou une combinaison des formes suivantes : rectangulaire, trapézoïdale, polygonale et curviligne.

5. Système de microvalve selon la revendication 1, comprenant en outre :
une pluralité d'orifices (22) dans la plaque à orifices (20) ; et
une pluralité de poutres en porte-à-faux (18) disposées en relation espacée par rapport à la plaque à orifices (20), dans lequel chaque poutre en porte-à-faux (18) est mobile entre des positions où l'un de la pluralité d'orifices (22) est fermé et ouvert par ladite poutre en porte-à-faux (18).

6. Système de microvalve selon la revendication 1, comprenant en outre un collecteur de sortie couplé à un côté de la plaque à orifices (20) opposé à la poutre en porte-à-faux (18).

7. Système de microvalve selon la revendication 1, dans lequel au moins l'une des couches piézoélectriques (42) ne s'étend pas jusqu'à une extrémité distale de la poutre en porte-à-faux (18).

8. Tête d'impression (98) comprenant :
le système de microvalve selon la revendication 1 comprenant le collecteur d'entrée ; et
une pluralité de microvalves couplées au collecteur d'entrée.

9. Tête d'impression (98) selon la revendication 8, dans laquelle au moins une poutre en porte-à-faux (18) comprend une paire de couches piézoélectriques (42) qui sont espacées l'une de l'autre et espacées de la plaque d'orifice (20), dans laquelle la terminaison du premier signal électrique comprend en outre l'application d'un second signal électrique à l'autre de la paire de couches piézoélectriques (42) pour revenir à la position de départ recouvrant et obstruant l'orifice (22).

10. Tête d'impression (98) selon la revendication 8, dans laquelle chaque poutre en porte-à-faux (18) au niveau de son extrémité proximale est couplée entre la plaque à orifices (20) et le collecteur d'entrée et à son extrémité distale est mobile entre des positions où l'un des orifices (22) est fermé et ouvert.

11. Tête d'impression (98) selon la revendication 8, dans laquelle chaque poutre en porte-à-faux (18) se pliant vers la plaque à orifices (20) ferme l'un des orifices (22).

12. Tête d'impression (98) selon la revendication 8, dans laquelle chaque poutre en porte-à-faux (18) comprend en outre une première couche de silicium ou de matériau inerte, ladite première couche comprenant sur celle-ci une seconde couche de matériau qui provoque la flexion de la poutre en porte-à-faux (18) en l'absence du signal électrique appliqué à la poutre en porte-à-faux (18).
